# FASCICULE DE BREVET EUROPEEN

(11) **EP 1 137 602 B1**
(45) Date de publication et mention de la délivrance du brevet: **15.09.2004**
(21) Numéro de dépôt: 99957366.0
(22) Date de dépôt: 03.12.1999
(51) Int. Cl.: C02F 11/08, C02F 11/04

(54) **PROCEDE DE TRAITEMENT DES BOUES PROVENANT DES INSTALLATIONS D'EPURATION BIOLOGIQUE DES EAUX**
VERFAHREN ZUR BEHANDLUNG VON SCHLÄMMEN AUS ANLAGEN FÜR BIOLOGISCHE ABWASSERREINIGUNG
METHOD FOR TREATING SLUDGE DERIVED FROM BIOLOGICAL PURIFICATION PLANTS

(30) Priorité: 04.12.1998 FR 9815503; 27.04.1999 FR 9905561
(43) Date de publication de la demande: 04.10.2001
(73) Titulaire: OTV SA, 94417 Saint-Maurice Cedex (FR)
(72) Inventeur: MALIK, Djafer, F-92100 Boulogne Billancourt (FR); LUCK, Francis, F-93160 Noisy Le Grand (FR); SIBONY, Jacques, F-75014 Paris (FR)
(74) Mandataire: Vidon, Patrice
(86) Numéro de dépôt international: PCT/FR1999/003016
(87) Numéro de publication internationale: WO 2000/034191

(56) Documents cités:
- DE-A- 19 508 785
- FR-A- 1 435 669
- FR-A- 2 689 495
- US-A- 5 057 220
- Y. C. WU ET AL.: "WET AIR OXIDATION OF ANAEROBICALLY DIGESTED SLUDGE" JOURNAL WATER POLLUTION CONTROL FEDERATION, vol. 59, no. 1, janvier 1987 (1987-01), pages 39-46, XP002118068
- DATABASE WPI Section Ch, Week 198307 Derwent Publications Ltd., London, GB; Class D15, AN 1983-15664K XP002118069 & JP 58 000300 A (NIIGATA ENG CO LTD), 5 janvier 1983 (1983-01-05)

## Description

L'invention concerne le domaine du traitement biologique des effluents en vue de leur épuration, telles que notamment, mais non exclusivement les eaux usées urbaines ou industrielles. Plus précisément, l'invention concerne le traitement des boues issues du traitement biologique de ces effluents.

De tels procédés de traitement biologique consistent à mettre en contact l'effluent à épurer avec une biomasse permettant de dégrader la pollution contenue dans celui-ci. La mise en oeuvre de tels traitements conduit à une augmentation progressive de la quantité de biomasse et à la nécessité d'évacuer la biomasse en excès. Cette biomasse en excès est ci-après désignée par les termes "boues en excès".

Un des problèmes importants suscités par le traitement biologique des effluents est constitué par les quantités sans cesse croissantes de ces boues en excès.

Diverses solutions techniques ont été imaginées pour réduire ces quantités.

Parmi ces techniques, on peut notamment citer l'incinération, le séchage, l'oxydation par voie humide (OVH), le traitement chimique et biologique afin d'obtenir des produits valorisables en agriculture, la digestion c'est-à-dire essentiellement la méthanisation (ou digestion anaérobie) ou encore la stabilisation aérobie thermophile.

La méthanisation et la digestion aérobie thermophile permettent de réduire le volume des boues en excès en dégradant une partie des matières volatiles (MV) qu'elles contiennent jusqu'à environ 50% de la valeur initiale des boues. Outre la réduction de ces matières volatiles, ces procédés conduisent à une digestion et à une hygiénisation des boues en excès.

D a déjà été proposé dans l'état de la technique d'accroître l'efficacité de la digestion des boues en faisant subir à celles-ci une étape de traitement préliminaire.

A titre de traitement préliminaire il a ainsi été proposé de faire subir aux dites boues un broyage mécanique en amont d'un digesteur anaérobie ou encore un traitement par ultrasons.

Ces traitements préliminaires permettent de réduire le temps de séjour des boues dans les digesteurs tout en maintenant une réduction des matières volatiles de la boue importante. Toutefois, de tels pré-traitements conduisent au mieux à éliminer 60% des matières volatiles des boues, d'où la nécessité d'éliminer les boues en excès résiduelles après digestion. De plus, ils nécessitent la mise en oeuvre de dispositifs relativement coûteux.

Une autre solution, basée sur l'action de l'ozone, a également été proposée. Ainsi le procédé décrit dans la demande de brevet Européen EP-A-0 645 347, propose de faire agir de l'ozone sur la liqueur mixte recirculée dans le bassin biologiquè afin de réduire la production de boues en excès. L'inconvénient principal de cette technique résulte des difficultés inhérentes à l'utilisation du réactif très oxydant qu'est l'ozone, ainsi que de son coût de mise en oeuvre.

On connaît par FR1435669 un procédé associant une digestion suivie d'une oxydation par voie humide. Toutefois, dans cette technique, les boues à traiter sont d'abord digérées puis ensuite oxydées. Il existe donc un risque d'introduire des composés toxiques dans l'étape de digestion. Cette technique présente également l'inconvénient d'apporter à l'étape de digestion des boues pouvant présenter une digestibilité faible pendant l'étape de digestion plus longue et plus difficile.

L'objectif principal de la présente invention est de proposer un procédé de traitement des boues en excès provenant du traitement biologique des effluents permettant le cas échéant de supprimer complètement la production de boues en excès.

Cet objectif est atteint grâce à l'invention qui concerne un procédé de traitement des boues en excès provenant d'au moins une installation d'épuration biologique d'effluents conduisant à la production de boues en excès, ledit procédé associant au moins une étape de digestion et au moins une étape d'oxydation par voie humide desdites boues, caractérisé en ce qu'il comprend les étapes consistant à oxyder par voie humide des boues en excès à une température comprise entre 50° C et 180° C et à une pression comprise entre 2 et 40 bars, à leur faire subir une digestion et à recirculer lesdites boues digérées vers ladite étape d'oxydation par voie humide.

On s'est en effet aperçu que, de façon surprenante, un tel traitement des boues en excès par une oxydation en voie humide dans les conditions de température et de pression mentionnées ci-dessus, en combinaison avec une digestion biologique de celles-ci, permettaient de réduire considérablement le volume des boues résiduelles et pouvaient même permettre, le cas échéant, la suppression totale de ces boues. Un tel résultat constitue un avantage considérable par rapport à l'état de la technique.

On notera que, dans le cas de la présente description, on entend le terme "digestion" comme visant tout procédé connu de l'homme de l'art de dégradation des boues par une biomasse. Ce terme inclut notamment :
- la digestion anaérobie, aussi appelée méthanisation, qui dégrade les molécules organiques des boues en CO₂, CH₄ et NH₃ ; la digestion anaérobie peut être mésophile, c'est-à-dire effectuée à une température allant de 30°C à 37°C, ou thermophile, c'est-à-dire effectuée à une température supérieure ;
- la stabilisation aérobie thermophile menée à une température comprise entre 45°C et 70°C, préférentiellement entre 50 °C et 65 °C qui consiste en une oxydation biologique effectuée par injection d'air dans une cuve agitée.

On notera également que les conditions de température et de pression préconisées par la présente invention pour l'étape d'oxydation par voie humide sont nettement moins sévères que les conditions habituelles de l'OVH pour laquelle on met en oeuvre habituellement des températures comprises entre 180° et 300°C et des pressions allant jusqu'à 120 bar. Ces conditions permettent d'inactiver la biomasse de façon à l'oxyder partiellement et à la solubiliser, mais de façon surprenante sans provoquer la formation de résidus minéraux insolubles (oxydes, carbonates, sulfates, etc.) qui ne pourraient pas être éliminés lors de l'étape de digestion et qui gênerait le fonctionnement de cette étape et limiterait ainsi les possibilités de réduction de la quantité de boues à évacuer.

Selon une variante, le procédé comprend une étape supplémentaire d'épaississement des boues lors du recyclage des boues vers l'étape d'oxydation par voie humide.

L'étape d'oxydation par voie humide préconisée ci-dessus pourra être mise en oeuvre pendant un temps de traitement variable notamment en fonction notamment de l'effluent à traiter. Toutefois, selon une variante préférentielle, cette étape sera préférentiellement conduite pendant une durée comprise entre 10 mn et 180 mn.

Afin de renforcer encore l'efficacité de cette étape on pourra prévoir, également préférentiellement, un ajustement préalable du pH des boues provenant de l'installation de traitement biologique, à une valeur pouvant varier, selon les cas, de 2 à 11.

Toujours dans le but d'accroître l'efficacité de l'étape d'oxydation par voie humide dans le cadre du procédé selon l'invention, cette étape sera avantageusement effectuée avec un rapport oxydant / demande chimique en oxygène (DCO) des boues non traitées en excès compris en 0,2 et 1,5 environ.

L'agent oxydant qui sera utilisé au cours de l'étape d'oxydation par voie humide pourra être l'air, de l'oxygène, de l'air enrichi en oxygène, du peroxyde d'hydrogène seul ou en combinaison avec l'un des trois composés cités précédemment.

Selon une variante du procédé, on utilisera également avantageusement un catalyseur dans le cadre de l'étape d'oxydation par voie humide pour augmenter l'efficacité d'abattement de la DCO, de la solubilisation de la DCO et de la réduction des matières en suspension (MES) des boues à traiter. Ce catalyseur pourra être homogène ou hétérogène.

Préférentiellement, ce catalyseur sera un métal choisi dans le groupe constitué par le manganèse, le fer, le cobalt, le nickel, le cuivre, le zinc et les mélanges et composés d'un ou plusieurs d'entre eux. D'une façon préférée entre toutes, ce catalyseur homogène sera un composé soluble de cuivre et/ou de zinc.

Selon une variante intéressante du procédé, l'azote ammoniacal pourra être éliminé lors du traitement oxydant de la bouc de façon catalytique en utilisant dans l'unité d'oxydation un catalyseur hétérogène prévu au-dessus de l'interface entre la phase gazeuse (milieu oxydant) et la phase liquide (boues). On pourra parfaire cette élimination en prévoyant de recycler au moins une partie de la phase gazeuse présente dans l'unité d'oxydation par voie humide après passage sur ledit catalyseur hétérogène, de manière à assurer un temps de contact suffisant avec les boues.

Ce traitement intégré de l'azote ammoniacal permet notamment d'éviter toute inhibition de la méthanisation par ce composé et de limiter les retours dans. les bassins biologiques d'une charge ammoniacale indésirable.

Par ailleurs, lorsque le procédé sera mis en oeuvre avec une stabilisation aérobie fonctionnant en continu, le procédé selon l'invention comprendra avantageusement une étape consistant à recycler au moins une partie des gaz provenant de l'étape d'oxydation par voie humide vers l'étape de digestion aérobie.

L'invention, ainsi que les différents avantages qu'elle présente seront plus facilement compris grâce à la description qui va suivre de modes non limitatifs de réalisation de celle-ci en référence à la figure unique qui représente schématiquement une installation pour la mise en oeuvre du procédé selon l'invention.

### EXEMPLE 1

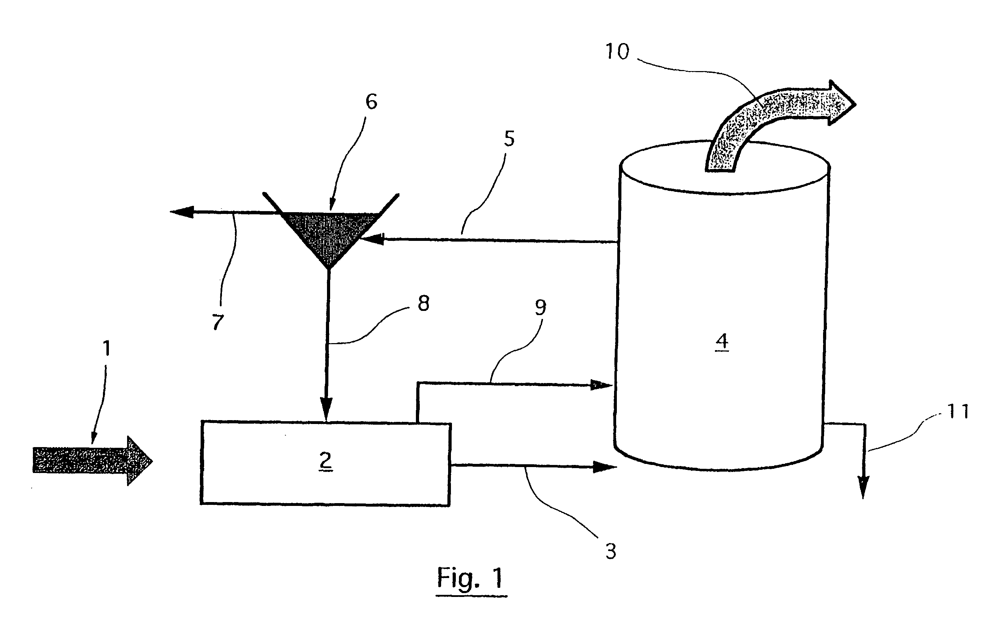

L'installation représentée à la figure 1 a été utilisée pour traiter des boues en excès provenant d'une installation de traitement biologique d'eaux usées selon le procédé dit des boues activées.

Cette installation comprend des moyens d'amenée 1 des boues épaissies en excès provenant d'un tel traitement vers une unité d'oxydation par voie humide 2.

Cette unité d'oxydation par voie humide 2 est reliée par des moyens de transfert 3 à un digesteur 4 qui permettent d'amener à ce digesteur les boues oxydées provenant de l'unité d'OVH. Ce digesteur 4 est constitué par un réacteur de digestion aérobie thermophile fonctionnant à une température d'environ 55°C C, dans lequel les bactéries anaérobies sont fixées sur des supports polymères de type Bio-Net 15, présentant une surface spécifique de 150 m2/m3 et un taux de vide de 97 %.

L'installation comprend par ailleurs des moyens de transfert 5 permettant d'acheminer les boues digérées provenant du digesteur 4 vers des moyens d'épaississement des boues incluant une unité de séparation 6 constituée par un décanteur. Ce décanteur est pourvu de moyens d'évacuation 7 d'une phase liquide vers les bassins de traitement biologiques et de moyens de recyclage 8 de la phase solide vers l'unité d'OVH 2. Celle-ci comprend par ailleurs des moyens de recyclage 9 des gaz oxydants qu'elle met en oeuvre vers le digesteur 4. Dans le cadre de ce mode de réalisation de l'invention, les boues épaissies contenant 23 g/L de matières sèches (MS), dont environ 16,5 g/L de MVS, sont introduites en continu par les moyens d'amenée 1 dans l'unité d'OVH.

De l'oxygène pur à une pression de 4 bar (à température ambiante) est introduit en continu dans cette unité 2, de façon à obtenir un rapport O2/DCO de 0,45. La température d'oxydation a été fixée à 150°C et le temps de séjour à 30 mn.

Une agitation à l'intérieur du réacteur 2 a été mise en oeuvre. Ces boues oxydées ont été analysées en sortie du réacteur 2. Leur pH s'est abaissé de 7,5 initialement à 5,5 après oxydation. Les résultats présentés dans le tableau 1 montrent que l'abattement de la DCO reste négligeable, et qu'il ne reste plus qu'environ 26 % de la teneur initiale en MS. On a constaté par ailleurs une augmentation considérable de la DCO soluble, ce qui atteste d'une solubilisation d'environ 45 % de la DCO totale des boues dans l'unité 2.

**Tableau 1**

| Boue épaissie avant oxydation | | | | | Boue oxydée | | | |
|---|---|---|---|---|---|---|---|---|
| O2/DCO | MS | MVS | DCOt | DCOs | MS | MVS | DCOt | DCOs |
| | g/l | g/l | g/l | g/l | g/l | g/l | g/l | g/l |
| 0,36 | 23,4 | 16,1 | 31,0 | 0,72 | 14,9 | 6,1 | 39,5 | 12,3 |
| 0,47 | 22,0 | 16,2 | 31,0 | 0,76 | 14,0 | 5,9 | 20,0 | 12,3 |
| 0,45 | 22,5 | 17,1 | 31,0 | 0,64 | 13,6 | 6,0 | 29,0 | 13,7 |
| MS : matières sèches | | | | | | | | |
| MVS : matières volatiles sèches | | | | | | | | |
| DCOt : DCO totale (particulaire + soluble) | | | | | | | | |
| DCOs : DCO soluble | | | | | | | | |

Ces boues oxydées sont acheminées en continu vers le digesteur 4 où elles subissent une digestion aérobie thermophile conventionnelle. Le gaz oxydant en excès est extrait du réacteur OVH 2 et introduit par la conduite 9 dans le digesteur 4 afin de pourvoir aux besoins du métabolisme bactérien aérobie et de contribuer au chauffage du digesteur. L'apport de la boue oxydée chaude par la canalisation 3 minimise aussi voire supprime totalement la nécessité de chauffer le digesteur 4 par un apport externe coûteux de calories.

Les boues digérées résiduelles provenant de ce digesteur sont ensuite évacuées par les moyens de transfert 5 vers le séparateur liquide-solide 6 (par exemple flottateur ou table d'égouttage).

Le bilan MS/MV entre les boues entrée du réacteur OVH 2 et sortie du digesteur 4 montre que les MV sont éliminées à environ 65 % et les MS à environ 58 %. Après décantation la phase solide a été envoyée dans l'unité d'OVH 2.

Sur une période prolongée seules quelques extractions de boues à partir du digesteur 4 ont été effectuées grâce à des moyens d'extraction 11. Le procédé selon l'invention a permis de réduire de manière significative, d'environ 80%, de telles extractions par rapport à l'art antérieur.

### EXEMPLE 2

L'installation représentée à la figure 1 a été utilisée pour traiter des boues en excès provenant d'une autre installation des traitement biologique d'eaux usées selon le procédé dit des boues activées.

Dans le cadre de ce mode de réalisation de l'invention, les boues épaissies contenant en moyenne 24 g/L de MS, dont environ 21 g/L de MVS, sont introduites en continu par les moyens d'amenée 1 dans l'unité d'OVH.

De l'oxygène pur à une pression de 4 bar (à température ambiante) est introduit en continu dans cette unité 2, de façon à obtenir un rapport O2/DCO de 0,45. La température d'oxydation a été fixée à 150°C et le temps.de séjour à 30 mn.

Une agitation à l'intérieur du réacteur 2 a été mise en oeuvre. Ces boues oxydées ont été analysées en sortie du réacteur 2. Leur pH s'est abaissé de 7,5 initialement à 5,5 après oxydation. Les résultats présentés dans le tableau 2 montrent que l'abattement de la DCO se situe aux alentours de 8 %, et qu'il ne reste plus qu'environ 28 % de la teneur initiale en matières sèches (MS). On a constaté par ailleurs une augmentation considérable de la DCO soluble, ce qui atteste d'une solubilisation d'environ 48 % de la DCO totale des boues dans l'unité 2.

**Tableau 2**

| Boue épaissie avant oxydation | | | | | Boue oxydée | | | |
|---|---|---|---|---|---|---|---|---|
| O2/DCO | MS | MVS | DCOt | DCOs | MS | MVS | DCOt | DCOs |
| | g/l | g/l | g/l | g/l | g/l | g/l | g/l | g/l |
| 0,43 | 22,6 | 20,2 | 38,0 | 4,8 | 7,6 | 7,6 | 36,3 | 18,2 |
| 0,48 | 26,1 | 21,8 | 38,0 | 0,43 | 6,3 | 6,3 | 33,5 | 17,0 |
| MS : matières sèches | | | | | | | | |
| MVS : matières volatiles sèches | | | | | | | | |
| DCOt : DCO totale (particulaire + soluble) | | | | | | | | |
| DCOs : DCO soluble | | | | | | | | |

Par ailleurs, les boues oxydées contiennent 830 mg/l d'acide acétique, 126 mg/l d'acide propionique et 39 mg/l d'acide butyrique (acides gras volatils (AGV)), ainsi que 4,9 g/l de carbohydrates (sucres), provenant de la dégradation oxydante des boues activées lors du traitement d'OVH. Ces composés sont facilement assimilés lors de la digestion anaérobie.

Ces boues oxydées sont acheminées en continu vers le digesteur 4 où elles subissent une digestion anaérobie thermophile classique. L'apport de la boue oxydée chaud par la canalisation 3 minimise aussi voire supprime totalement la nécessité de chauffer le digesteur 4 par un apport externe coûteux de calories, nécessaire aux besoins du métabolisme bactérien anaérobie thermophile. Les boues digérées résiduelles provenant de ce digesteur sont ensuite évacuées par les moyens de transfert 5 vers le décanteur 6. Le bilan MS/MV entre les boues entrée du réacteur OVH 2 et sortie du digesteur 4 montre que les MV sont éliminées à environ 70 % et les MS à environ 62%. Après décantation la phase solide a été envoyée dans l'unité d'OVH 2.

Sur une période d'environ 6 mois, aucune extraction de boues à partir du digesteur 4 n'a été effectuée. Le procédé selon l'invention a donc permis de supprimer totalement sur cette période les extractions de boues en excès par rapport à l'art antérieur.

### EXEMPLE COMPARATIF (non conforme à l'invention)

L'installation représentée à la figure 1 a été utilisée pour traiter les boues en excès provenant de l'installation des traitement biologique d'eaux usées selon le procédé di des boues activées mentionnées dans l'exemple 2 (24 g/L de MS, dont environ 21 g/L de MVS, sont introduites en continu par les moyens d'amenée 1 dans l'unité d'OVH.

De l'oxygène pur à une pression supérieure à celle préconisée par la présente invention, soit 50 bar (à température ambiante) est introduit en continu dans cette unité 2, de façon à obtenir un rapport O2/DCO de 0,90. La température d'oxydation a été fixée à une température supérieure à la température préconisée par la présente invention, à savoir 235 °C. Le temps de séjour des boues dans l'unité d'OVH a été fixé à 60 mn.

Une agitation à l'intérieur du réacteur 2 a été mise en oeuvre. Ces boues oxydées ont été analysées en sortie du réacteur 2. Leur pH s'est abaissé de 7,5 initialement à 6,8 après oxydation. Les résultats présentés dans le tableau 3 montrent que l'abattement de la DCO se situe aux alentours de 85 %, et qu'il ne reste plus qu'environ 25 % de la teneur initiale en matières sèches (MS), mais que ces matières sèches sont essentiellement minérales.

**Tableau 3**

| Boue épaissie avant oxydation | | | | | Boue oxydée | | | |
|---|---|---|---|---|---|---|---|---|
| O₂/DCO | MS | MVS | DCOt | DCOs | MS | MVS | DCOt | DCOs |
| | g/l | g/l | g/l | g/l | g/l | g/l | g/l | g/l |
| 0,91 | 24,6 | 20,2 | 39,0 | 0,91 | 5,7 | 0,86 | 6,3 | 5,9 |
| 0,90 | 25,1 | 21,8 | 38,5 | 0,43 | 5,3 | 0,90 | 5,1 | 4,7 |
| MS : matières sèches | | | | | | | | |
| MVS : matières volatiles sèches | | | | | | | | |
| DCOt : DCO totale (particulaire + soluble) | | | | | | | | |
| DCOs : DCO soluble | | | | | | | | |

Par ailleurs, les boues oxydées contiennent 2920 mg/l d'acide acétique, 110 mg/l d'acide propionique et 21 mg/l d'acide butyrique (AGV), ainsi que 1,8 g/l de carbohydrates (sucres), provenant de la dégradation oxydante des boues activées lors du traitement d'OVH.

Ces boues oxydées sont acheminées en continu vers le digesteur 4 où elles subissent une digestion anaérobie thermophile classique. Les boues digérées résiduelles provenant de ce digesteur sont ensuite évacuées par les moyens de transfert 5 vers le décanteur 6. Le bilan MS/MV entre les boues entrée du réacteur OVH 2 et sortie du digesteur 4 montre que les MV sont éliminées à environ 75 % et les MS à environ 52 %. Après décantation la phase solide a été envoyée dans l'unité d'OVH 2.

Sur une période d'environ 6 mois, trois extractions de boues à partir du digesteur 4 ont dû être effectuées, de façon à maintenir la concentration moyenne des boues circulant dans le digesteur 4 à 17 g/l. Cette mise en oeuvre du procédé non conforme à l'invention n'a donc pas permis de supprimer totalement sur cette période les extractions de boues en excès, du fait de la minéralisation excessive des boues oxydées, conduisant à une accumulation progressive de résidus minéraux dans le digesteur.

De plus, l'exploitation du digesteur a été rendue particulièrement difficile par des instabilités de fonctionnement liés à une toxicité des boues oxydées, qui contiennent des substances inhibitrices de la biomasse ainsi qu'une quantité excessive d'AGV dès lors qu'elles sont oxydées à des températures supérieures à 170 °C environ, d'après des essais complémentaires effectués.

Les modes de réalisation ainsi décrits n'ont pas pour objectif de réduire la portée de celle-ci. En conséquence, il pourra y être apporté de nombreuses modifications sans sortir de son cadre.

## Revendications

1. Procédé de traitement des boues en excès provenant d'au moins une installation d'épuration biologique d'effluents conduisant à la production de boues en excès, ledit procédé associant au moins une étape de digestion et au moins une étape d'oxydation par voie humide desdites boues.
**caractérisé en ce qu'**il comprend les étapes consistant à oxyder par voie humide les boues en excès à une température comprise entre 50° C et 180° C et à une pression comprise entre 2 et 40 bars, à leur faire subir une digestion et à récirculer lesdites boues digérées vers ladite étape d'oxydation par voie humide.

2. Procédé selon la revendication 1 **caractérisé en ce qu'**il comprend une étape supplémentaire d'épaississement des boues prévue avant ladite étape d'oxydation par voie humide.

3. Procédé selon l'une quelconque des revendications 1 ou 2 **caractérisé en ce qu'**il comprend une étape supplémentaire d'épaississement lors du recyclage desdites boues vers l'étape d'oxydation par voie humide.

4. Procédé selon l'une quelconque des revendications 1 à 3 **caractérisé en ce que** ladite étape préliminaire d'oxydation par voie humide est effectuée pendant une durée comprise entre 10 mn et 180 mn.

5. Procédé selon l'une quelconque des revendications 1 à 4 **caractérisé en ce qu'**il comprend une étape consistant à ajuster le pH des boues avant de leur faire subir ladite oxydation par voie humide, à une valeur comprise entre 2 et 11.

6. Procédé selon l'une quelconque des revendications 1 à 5 **caractérisé en ce que** ladite étape d'oxydation par voie humide est effectuée avec un rapport oxydant / demande chimique en oxygène (DCO) des boues non traitées compris entre 0,2 et 1,5 environ.

7. Procédé selon l'une quelconque des revendications 1 à 6 **caractérisé en ce que** ladité étape d'oxydation par voie humide est effectuée en présence d'au moins un agent oxydant choisi parmi l'air, l'oxygène, l'air enrichi en oxygène, et le peroxyde d'hydrogène seul ou en combinaison avec l'un des composés précédents.

8. Procédé selon l'une quelconque des revendications 1 à 7 **caractérisé en ce que** ladite étape d'oxydation par voie humide est effectuée en présence d'au moins un catalyseur homogène.

9. Procédé selon l'une quelconque des revendications 1 à 8 **caractérisé en ce que** ladite étape d'oxydation par voie humide est effectuée en présence d'au moins un catalyseur hétérogène.

10. Procédé selon la revendication 8 où 9 **caractérisé en ce que** ledit catalyseur est un métal choisi dans le groupe constitué par le manganèse, le fer, le cobalt, le nickel, le cuivre, le zinc et les mélanges et composés d'un ou plusieurs d'entre eux.

11. Procédé selon les revendications 8, et 10 **caractérisé en ce que** ledit catalyseur est un composé soluble du cuivre et/ou du zinc.

12. Procédé selon la revendication 9 ou 10 **caractérisé en ce que** ledit catalyseur est prévu, à l'intérieur d'une unité d'oxydation par voie humide, au-dessus de l'interface entre la phase gazeuse constituée par le milieu oxydant et la phase liquide constituée par les boues.

13. Procédé selon la revendication 12 **caractérisé en ce qu'**il comprend une étape consistant à recycler au moins une partie de la phase gazeuse présente dans l'unité d'oxydation par voie humide après passage sur ledit catalyseur hétérogène, de manière à assurer un temps de contact suffisant avec les boues.

14. Procédé selon l'une quelconque des revendications 1 à 13 **caractérisé en ce que** ladite étape de digestion est une étape de stabilisation aérobie thermophile et **en ce qu'**il comprend une étape de recyclage d'au moins une partie des gaz provenant de ladite étape d'oxydation par voie humide vers ladite étape de digestion.

15. Procédé l'une quelconque des revendications 1 à 13 **caractérisé en ce que** ladite étape de digestion est soit une étape de digestion anaérobie mésophile, soit une étape de digestion anaérobie thermophile.

16. Procédé selon l'une quelconque des revendications 14 ou 15 **caractérisé en ce que** ladite étape de digestion fait intervenir une biomasse fixée sur des supports.

## Patentansprüche

1. Verfahren zur Behandlung überschüssiger Schlämme aus mindestens einer biologischen Abwässer-Kläranlage, die zur Erzeugung überschüssiger Schlämme führt, wobei das Verfahren mindestens einen biologischen Abbauschritt und mindestens einen nassen Oxidationsschritt dieser Schlämme umfasst,
**dadurch gekennzeichnet, dass** es die Schritte umfasst, dass die überschüssigen Schlämme bei Temperaturen zwischen 50 °C und 180 °C sowie bei Drücken zwischen 2 und 40 bar nass oxidiert werden, einem biologischen Abbau unterworfen werden und danach zum nassen Oxidationsschritt zurückgeführt werden.

2. Verfahren nach Anspruch 1,
**dadurch gekennzeichnet, dass** es einen zusätzlichen Eindickungsschritt der Schlämme umfasst, der vor dem nassen Oxidationsschritt liegt.

3. Verfahren nach einem der Ansprüche 1 oder 2,
**dadurch gekennzeichnet, dass** es einen zusätzlichen Eindickungsschritt beim Rückführen der Schlämme zum nassen Oxidationsschritt aufweist.

4. Verfahren nach einem der Ansprüche 1 bis 3,
**dadurch gekennzeichnet, dass** der vorhergehende nasse Oxidationsschritt über eine Zeitdauer von 10 bis 180 Minuten durchgeführt wird.

5. Verfahren nach einem der Ansprüche 1 bis 4,
**dadurch gekennzeichnet, dass** es einen Schritt umfasst, bei dem der pH-Wert der Schlämme, vor der nassen Oxidation, auf einen Wert zwischen 2 und 11 eingestellt wird.

6. Verfahren nach einem der Ansprüche 1 bis 5,
**dadurch gekennzeichnet, dass** der nasse Oxidationsschritt bei einem Verhältnis Oxidans/chemischer Sauerstoffbedarf (CSB) der unbehandelten Schlämme zwischen etwa 0,2 und 1,5 stattfindet.

7. Verfahren nach einem der Ansprüche 1 bis 6,
**dadurch gekennzeichnet, dass** der nasse Oxidationsschritt in Gegenwart mindestens eines Oxidationsmittels stattfindet, wobei dieses Oxidationsmittel unter Luft, Sauerstoff, mit Sauerstoff angereicherter Luft und Wasserstoffperoxid, alleine oder mit einem der vorhergehenden Zusammensetzungen kombiniert, gewählt wird.

8. Verfahren nach einem der Ansprüche 1 bis 7,
**dadurch gekennzeichnet, dass** der nasse Oxidationsschritt in Gegenwart von mindestens einem homogenen Katalysator erfolgt.

9. Verfahren nach einem der Ansprüche 1 bis 8,
**dadurch gekennzeichnet, dass** der nasse Oxidationsschritt in Gegenwart von mindestens einem heterogenen Katalysator erfolgt.

10. Verfahren nach einem der Ansprüche 8 oder 9,
**dadurch gekennzeichnet, dass** der erwähnte Katalysator ein Metall aus der Gruppe ist, die Mangan, Eisen, Kobalt, Nickel, Kupfer, Zink und Legierungen oder Zusammensetzungen eines oder mehrerer dieser Metalle umfasst.

11. Verfahren nach den Ansprüchen 8 und 10,
**dadurch gekennzeichnet, dass** es sich beim erwähnten Katalysator um eine lösliche Zusammensetzung von Kupfer und/oder Zink handelt.

12. Verfahren nach einem der Ansprüche 9 oder 10,
**dadurch gekennzeichnet, dass** sich der Katalysator innerhalb einer Einheit zur nassen Oxidation oberhalb der Schnittstelle zwischen der aus dem oxidierenden Milieu gebildeten Gasphase und der von den Schlämmen gebildeten flüssigen Phase befindet.

13. Verfahren nach Anspruch 12,
**dadurch gekennzeichnet**, das es einen Schritt umfasst, bei dem mindestens ein Teil der in der nassen Oxidationseinheit vorhandenen gasförmigen Phase rezykliert wird, nachdem sie über den heterogenen Katalysator geleitet wurde, um eine ausreichende Berührungszeit mit den Schlämmen zu gewährleisten.

14. Verfahren nach einem der Ansprüche 1 bis 13,
**dadurch gekennzeichnet, dass** es sich beim Digestionsschritt um einen thermophilen aeroben Stabilisierungsschritt handelt und dass es einen Rezyklierungsschritt von mindestens einem Teil der vom nassen Oxidationsschritt kommenden Gase zum biologischen Abbau umfasst.

15. Verfahren nach einem der Ansprüche 1 bis 13,
**dadurch gekennzeichnet, dass** es sich beim biologischen Abbauschritt entweder um einen anaeroben, mesophilen oder um einen anaeroben, thermophilen Digestionsschritt handelt.

16. Verfahren nach einem der Ansprüche 14 oder 15,
**dadurch gekennzeichnet, dass** der biologische Abbauschritt bewirkt, dass eine auf Unterlagen fixierte Biomasse zu Stande kommt.

## Claims

1. A process for treating excess sludge stemming from at least one biological purification plant for effluent leading to the production of excess sludge, said process combining at least one digestion stage and at least one wet oxidation stage for said sludge,
**characterised in that** it comprises stages consisting in wet oxidation of the excess sludge at a temperature of between 50°C and 180°C and a pressure of between 2 and 40 bar, subjecting it to digestion and recirculating said digested sludge to said wet oxidation stage.

2. A process according to claim 1, **characterised in that** it comprises an additional sludge thickening stage before said wet oxidation stage.

3. A process according to either one of claims 1 or 2,
**characterised in that** it comprises an additional thickening stage at the time of recycling of said sludge to the wet oxidation stage.

4. A process according to any one of claims 1 to 3,
**characterised in that** said preliminary wet oxidation stage is performed for a period of between 10 min. and 180 min.

5. A process according to any one of claims 1 to 4,
**characterised in that** it comprises a stage consisting in adjusting the pH of the sludge before subjecting it to said wet oxidation stage, to a value of between 2 and 11.

6. A process according to any one of claims 1 to 5,
**characterised in that** said wet oxidation stage is performed with an oxidant/chemical oxygen demand (COD) ratio of the untreated sludge of between 0.2 and 1.5 approximately.

7. A process according to any one of claims 1 to 6,
**characterised in that** said wet oxidation stage is performed in the presence of at least one oxidising agent selected from among air, oxygen, oxygen-enriched air and hydrogen peroxide, alone or in combination with one of the preceding compounds.

8. A process according to any one of claims 1 to 7,
**characterised in that** said wet oxidation stage is performed in the presence of at least one homogeneous catalyst.

9. A process according to any one of claims 1 to 8,
**characterised in that** said wet oxidation stage is performed in the presence of at least one heterogeneous catalyst.

10. A process according to claim 8 or claim 9,
**characterised in that** said catalyst is a metal selected from the group consisting of manganese, iron, cobalt, nickel, copper, zinc and mixtures and compounds of one or more thereof.

11. A process according to claims 8 and 10, **characterised in that** said catalyst is a soluble compound of copper and/or zinc.

12. A process according to claim 9 or claim 10,
**characterised in that** said catalyst is provided, inside a wet oxidation unit, above the interface between the gaseous phase consisting of the oxidising medium and the liquid phase consisting of the sludge.

13. A process according to claim 12, **characterised in that** it comprises a stage consisting in recycling at least part of the gaseous phase present in the wet oxidation unit after passage over said heterogeneous catalyst, in such a way as to ensure sufficient contact time with the sludge.

14. A process according to any one of claims 1 to 13,
**characterised in that** said digestion stage is a thermophilic aerobic stabilisation stage and **in that** it comprises a stage of recycling at least some of the gases stemming from said wet oxidation stage to said digestion stage.

15. A process according to any one of claims 1 to 13,
**characterised in that** said digestion stage is either a mesophilic anaerobic digestion stage or a thermophilic anaerobic digestion stage.

16. A process according to either one of claims 14 or 15,
**characterised in that** said digestion stage involves biomass immobilised on supports.
